# EUROPEAN PATENT APPLICATION

(11) **EP 3 716 122 A1**
(43) Date of publication of application: **30.09.2020**
(21) Application number: 19464006.6
(22) Date of filing: 27.03.2019
(51) Int. Cl.: G06F 21/62, G06F 21/60

(54) **AI BASED SYSTEM AND METHOD FOR SECURE DATA PROCESSING - APPLICATIONS IN CLINICAL WORKFLOW DEPLOYMENT AND MODEL TRAINING**

(71) Applicant: Siemens Healthcare GmbH, 91052 Erlangen (DE); Siemens Medical Solutions USA, Inc., Malvern, PA 19355 (US)
(72) Inventor: VIZITIU, Anamaria, 520038 Sfantu Gheorghe (RO); NITA, Cosmin Ioan, 500470 Brasov (RO); Dr. ITU, Lucian Mihai, 500294 Brasov (RO); Dr. SHARMA, Puneet, Princeton Junction, NJ 08550 (US); KRAUS, Martin, 90765 Fürth (DE)

(57) **Abstract**

The invention provides methods and systems for securely processing medical information. The method comprises:
Providing (S110), by a first entity (10), training input data based on medical information of at least one patient;
encrypting (S112), by the first entity (10), the provided training input data to provide encrypted training input data, wherein the encrypting (S112; S206) is performed using a homomorphic encryption key;
transmitting (S114), by the first entity (10) to a second entity (20) that does not have access to the homomorphic encryption key, the encrypted training input data;
providing (S120) inference phase input data;
encrypting (S122) the provided inference phase input data by the first entity (10) in order to provide encrypted inference phase input data;
processing (S126) the encrypted inference phase input data by an artificial intelligence structure trained using the encrypted training input data so as to obtain an output of the trained artificial intelligence structure based on the encrypted inference phase input data;
decrypting (S130), by the first entity (10), the output of the trained artificial intelligence structure.

## Description

The present invention relates to a computer-implemented method for securely processing medical information, to a system for securely processing medical information, and to corresponding computer programs and data storage media.

In modern healthcare, a steadily increasing amount of medical data is produced, enabling physicians and digital healthcare system providers to offer increasingly accurate and complex digital services.

In particular, with the recent improvements in machine learning and artificial intelligence, a large number of new and promising applications as well as improvements of existing services have been found. However, applying machine learning to a problem which involves medical, financial, or other types of sensitive data, not only requires accurate predictions but also careful attention to maintaining data privacy and security. Legal and ethical requirements may prevent the use of cloud-based machine learning solutions for such tasks. The scientific publication of Dowlin et al., "CryptoNets: Applying Neural Networks to Encrypted Data with High Throughput and Accuracy", available under the URL http://proceedings.mlr.press/v48/gilad-bachrach16.pdf, provides a brief overview of the involved issues.

One example of relevant legislation is the European General Data Protection Regulation, or GDPR for short. According to GDPR, data controllers and processors are permitted to use, process and publish personal information in just about any way that they choose by making it impossible or impractical to collect personal data to an identifiable person. Anonymization and pseudonymization are two distinct techniques that permit data controllers and processors to use de-identified data. The difference between the two techniques is whether the data can be re-identified:
GDPR defines anonymized data as "data rendered anonymous in such a way that the data subject is not were no longer identifiable." True data anonymized is an extremely high bar, and the data controllers often fall short of actually anonymizing data.

GDPR further defines pseudonymization as "the processing of personal data in such a way that the data can no longer be attributed to a specific data subject without the use of additional information." Beholding the de-identified data separately from the "additional information", the GDPR permits data handlers to use personal data more liberally without fear of infringing the rights of data subjects.

Specifically, in the case of genetic data true anonymization is basically impossible: specific techniques can review genetic markers tied to specific, physical traits should such as eye color or hair color. Algorithms can cross-reference those trades against publicly available demographic data to identify the corresponding person.

On the other hand, developing better and more accurate digital healthcare systems that may support earlier and more accurate and more precise diagnoses, it is essential that medical data relevant to these diagnoses is provided.

An alternative to classical anonymization and pseudonymization, for running software structures such as algorithms and models based on medical data (or any other type of personal data) without having to reveal the medical data or personal data to the entity running the software structures, is to use homomorphic encryption. Homomorphic encryption is a form of encryption that allows the computation on cipher texts, generating an encrypted result which, when decrypted, matches the result of the operations as if they had been performed for the plaintext. One main advantage of homomorphic encryption is therefore that it allows computation on encrypted data.

Such a use of homomorphic encryption is described for example in the scientific publication by Craig Gentry: "Fully homomorphic encryption using ideal lattices", STOC, Vol. 9, No. 2009, 2009. However, one drawback of homomorphic encryption (sometimes also called "fully homomorphic encryption", FHE) is that it is around seven orders of magnitude slower than computations performed on plain text.

It is therefore one of the objects of the present invention to provide methods and systems for securely processing medical information.

This object is solved by the subject-matter of the independent claims. Advantageous modifications, refinements and options are described in the dependent claims as well as in the description with reference to the drawings.

According to a first aspect, a computer-implemented method for securely processing medical information is provided, the method comprising at least:
providing, by a first entity, training input data based on medical information of at least one patient;
encrypting, by the first entity, the provided training input data to provide encrypted training input data, wherein the encrypting is performed using a homomorphic encryption key k;
transmitting, by the first entity to a second entity that does not have access to the homomorphic encryption key k, the encrypted training input data;
providing inference phase input data;
encrypting the provided inference phase input data by the first entity in order to provide encrypted inference phase input data;
processing the encrypted inference phase input data by an artificial intelligence structure trained using the encrypted training input data so as to obtain an output of the trained artificial intelligence structure based on the encrypted inference phase input data;
decrypting, by the first entity, the output of the trained artificial intelligence structure.

This method has, among others, the following advantages:
- personal data does not have to be revealed for the development and/or execution of algorithms or models, in particular not for the training of artificial intelligence structures;
- the risk of identifying personal data is reduced when compared to classical techniques of anonymization and pseudonymization;
- existing algorithms and models do not have to be rewritten for ensuring that they can be run in a homomorphically encrypted way (only, if necessary, re-factored);
- medical data sources such as hospitals and research organizations can collaborate without necessitating any disclosure of patient data (by the medical data sources) or of models, algorithms, parameter sets, artificial intelligence structures and/or the like by research or software-developing organizations.

In the present context, an entity should be understood to mean a particular tenant or an organization (and in particular a computing system or computing device of said particular tenant or organization) that has a distinct pattern of access properties to different sets of data. For example, the access properties may comprise the rights to access certain data or, conversely, the lack of rights to access certain data. In the present context, it is necessary to distinguish between different entities in order to better describe their relationship and interactions according to the methods and systems of the present invention. If the entity is a computing system, it may comprise at least one computing device, a network connecting a plurality of computing devices in case of the computing system comprising such a plurality of computing devices, and/or the like.

The difference between entities is not necessarily a difference of location. For example, two entities may share the same building but may be separated and distinguishable from one another by the rights they have to access certain data.

In many examples and embodiments described herein, the entity described as "first entity" is a data source in particular of medical data, that is, an entity that has access to medical data about at least one patient, in particular by generating and/or securely receiving such data. For example, the first entity may be a computing device of a hospital or research institute.

The computing device may be realised as any device, or any means, for computing, in particular for executing a software, an app, or an algorithm. For example, the computing device may comprise a central processing unit (CPU) and a memory operatively connected to the CPU. The computing device may also comprise an array of CPUs, an array of graphical processing units (GPUs), at least one application-specific integrated circuit (ASIC), at least one field-programmable gate array, or any combination of the foregoing. The computing device may comprise an input interface, e.g. an interface for connecting to a network such as an intranet and/or the Internet, and an output interface, e.g. an interface for connecting to a network such as an intranet and/or the Internet.

The computing device may partially or completely be implemented by a cloud computing platform.

In systems based on cloud computing technology, a large number of devices is connected to a cloud computing system via the Internet. The devices may be located in a remote facility connected to the cloud computing system. For example, the devices can comprise, or consist of, equipment, sensors, actuators, robots, and/or machinery in an industrial set-up(s). The devices can be medical devices and equipment in a healthcare unit. The devices can be home appliances or office appliances in a residential/commercial,establishment.

The cloud computing system may enable remote configuring, monitoring, controlling, and maintaining connected devices (also commonly known as 'assets'). Also, the cloud computing system may facilitate storing large amounts of data periodically gathered from the devices, analyzing the large amounts of data, and providing insights (e.g., Key Performance Indicators, Outliers) and alerts to operators, field engineers or owners of the devices via a graphical user interface (e.g., of web applications). The insights and alerts may enable controlling and maintaining the devices, leading to efficient and fail-safe operation of the devices. The cloud computing system may also enable modifying parameters associated with the devices and issues control commands via the graphical user interface based on the insights and alerts.

The cloud computing system may comprise a plurality of servers or processors (also known as 'cloud infrastructure'), which are geographical distributed, connected with each other via a network. A dedicated platform (hereinafter referred to as 'cloud computing platform') is installed on the servers/processors for providing above functionality as a service (hereinafter referred to as 'cloud service'). The cloud computing platform may comprise a plurality of software programs executed on one or more servers or processors of the cloud computing system to enable delivery of the requested service to the devices and its users.

One or more application programming interfaces (APIs) are deployed in the cloud computing system to deliver various cloud services to the users.

In many examples and embodiments described herein, the entity described as "second entity" is a computing system or computing device of a research institute or a digital health services provider that has particular knowledge about an advantageous software structure or that wishes to make use of the medical data but that is not allowed, or desired, to have access to that medical data.

Training input data, as the term is used herein, refers to a set of data that is used to train an artificial intelligence structure which may comprise, or consist of, at least one artificial neural network.

Inference phase input data, as the term is used herein, refers to a set of data that has not been used for training said artificial intelligence structure, but for which the output of the artificial intelligence structure is desired to be known.

The artificial intelligence structure may comprise, or consist of, an artificial neural network. The artificial intelligence structure may realize a forward model which may be based on computational fluid dynamics, electrophysiology, electromechanics and/or the like. The artificial intelligence structure may in particular be configured to generate, by taking encrypted inference phase input data as input, a clinical measure of interest.

Advantageous embodiments of the method according to the first aspect are described in the following. It should be understood that the described embodiments may be freely combined with one another, thus generating synergetic beneficial effects.

In some advantageous embodiments, the method further comprises: training, by the second entity, an artificial intelligence structure using the received encrypted training input data in order to obtain the trained artificial intelligence structure. In other words, the trained artificial intelligence structure is an instantiated version of the (untrained) artificial intelligence structure that has been trained by the second entity using the received encrypted training input data.

Advantageously, as the first encryption key is a homomorphic encryption key, training the artificial intelligence structure with encrypted training input data has essentially, or completely, the same effect as training an artificial intelligence structure with the unencrypted training input data. In this way, the second entity may provide the framework of an artificial intelligence structure without having direct access to actual medical data, and then be able to train that artificial intelligence structure still without direct access to the actual medical data, obtaining, however, much the same benefits as if it had said direct access.

In some advantageous embodiments, the method further comprises: providing the trained artificial intelligence structure to the first entity by the second entity. This may, for example, comprise transmitting the structural details (number of layers, number of notes, type of layers, hyperparameters and/or the like) of the artificial intelligence structure as well as trained parameters, that is, parameters that have been determined by the training of the artificial intelligence structure, to the second entity. Providing the trained artificial intelligence structure to the first entity has the advantage that the first entity may perform the inference phase by itself, thus saving effort, bandwidth and cost in transmitting encrypted inference phase input data to the second entity.

In these advantageous embodiments, it is thus further beneficial if the inference phase input data is provided and encrypted by the first entity, and that then the encrypted inference phase input data is input into the trained artificial intelligence structure by the first entity. In other words, the second entity may offer the first entity the service of providing a trained artificial intelligence structure for use by the first entity.

In some advantageous embodiments, the method further comprises: transmitting, by the first entity, the encrypted inference phase input data to an entity different from the first entity which in particular does not have access to a decryption key corresponding to the homomorphic encryption key; processing, by the entity different from the first entity (in particular by a computing device of said entity), the encrypted inference phase input data using the trained artificial intelligence structure (comprising in particular instantiating the trained artificial intelligence structure and inputting the encrypted inference phase input data into the instantiated artificial intelligence structure) in order to obtain an output of the trained artificial intelligence structure; and
transmitting, by the entity different from the first entity, the output of the trained artificial intelligence structure to the first entity. In this way, an entity different from the first entity can be used to perform the often resource-intensive instantiating of the trained artificial intelligence structure and the processing of the inference phase input data by the trained artificial intelligence structure.

Since the entity different from the first entity does preferably not have access to the homomorphic encryption key, it cannot decrypt the output of the trained artificial intelligence structure but can only provide it to the first entity which can then decrypt it using the homomorphic encryption key.

The decryption key corresponding to the homomorphic encryption key, representing, in variants and embodiments where the homomorphic encryption key is a symmetric homomorphic encryption key, the same as the homomorphic encryption key. In other variants and embodiments, e.g. when the homomorphic encryption key is part of a public/private key pair, the homomorphic encryption key may be the public key and the decryption key may be the corresponding private key, or vice versa.

Keys may be distributed for example as described in the scientific publication "Yashaswini J, Key Distribution for Symmetric Key Cryptography: A Review, International Journal of Innovative Research in Computer and Com-munication Engineering, Vol. 3, Issue 5, May 2015, accessible e.g. at the URL: http://www.rroij.com/open-access/key-distribution-for-symmetric-keycryptography-a-review.php?aid=56128.

Keys may also be distributed, as another example, as described in the scientific publication "M. Bala Krishna, M. Doja, Symmetric key management and distribution techniques in wireless ad hoc networks, 2011 International Conference on Computational Intelligence and Communication Networks, 7-9 Oct. 2011, accessible e.g. at the URL: https://ieeexplore.ieee.org/abstract/document/6112966/authors #authors .

In these advantageous embodiments, the entity different from the first entity either is the second entity (first option), or is a third entity that is different from both the first and the second entity (second option).

When the entity different from the first entity is the second entity, then the second entity not only provides the trained artificial intelligence structure but also deploys the trained artificial intelligence structure as a service. When the entity different from the first entity is a third entity different from both the first entity and the second entity, this has the advantage that the third entity may be chosen based on criteria such as availability, cost, computing power available and/or the like. For example, the third entity may be a computing device, preferably a cloud computing platform. In this way, the trained artificial intelligence structure may be deployed as a cloud service. Because of the outputs of that cloud service being encrypted, it is a service that is only useful for the first entity which has access to (in particular: possesses) the homomorphic encryption key.

In some advantageous embodiments, the method further comprises requesting, by the second entity, training data fulfilling at least one selection criterion from the first entity. For example, the at least one selection criterion may comprise a request for:
- training data based on specific demographics (e.g. only female patient between twenty and thirty years old);
- training data based on at least one specific diagnosis;
- training data having specific medical image properties (e.g. images having a predefined minimum quality of images, images generated by a specific modality and/or the like);
- training data being generated, or having been subjected to, a specific pre-processing script (e.g. normalization, curation, filtering and/or the like).

The providing of the training input data by the first entity is then performed such as to fulfill the at least one criterion. This may help, for example, to train the artificial intelligence structure (preferably an artificial neural network) with semi-supervised or even unsupervised learning. Accordingly, the training of the artificial intelligence structure may (in particular, but not only) in these embodiments be performed by semi-supervised or by unsupervised learning.

In some advantageous embodiments, the method further comprises generating synthetic patient data by using a workflow model configured to generate, from the provided medical information of the at least one patient, said synthetic patient data. Synthetic patient data may be generated, for example, by the workflow model by using a variational autoencoder, or as has been described in the scientific publication by Walonoski et al.: "Synthea: An approach, method, and software mechanism for generating synthetic patients and the synthetic electronic health care record", Journal of the American Medical Informatics Association, Volume 25, Issue 3, 1 March 2018, Pages 230-238, https://doi.org/10.1093/jamia/ocx079. In other words, the workflow model may itself be based on, comprise, or consist of, an artificial intelligence structure, preferably an artificial neural network.

Preferably, then, the provided training input data comprise, or consist of, the generated synthetic patient data. This advantageously adds another layer of patient data security.

Moreover, when generating synthetic patient data, a large number of datasets can be automatically generated, thus leading to an extensive database which improves the training of any artificial intelligence structure using this database. Moreover, complex types of datasets can be generated that may not usually be available from actual direct medical information (e.g. because in the synthetic patient data information from multiple modalities is combined).

Additionally, since the generation of the synthetic patient data is preferably automatic (i.e. completely automated), the cost of generating a large database is reduced (e.g. as compared to generating a large database from actual medical information). Another advantage is that rare types of datasets can be sampled better. The training can be iteratively improved with either more actual medical data, or with better representations of the features of the original actual medical data by the generated synthetic patient data.

In some advantageous variants or refinements of these embodiments, the workflow model for generating the synthetic patient data may be provided by the second entity to the first entity. In this way, the second entity can be a more complete digital services provider that does not only provide the service of training the artificial intelligence structure but also the service of providing the workflow model. Thus, the first entity, which may be a medical research institute, a hospital, a university or the like, does not need to put any effort into technical and computational problem-solving but can focus on the medical parts, whereas the second entity focuses on the technical and computational problem-solving without any access to actual medical data.

In some advantageous embodiments, the homomorphic encryption key is a public key of a public/private key pair, and a homomorphic decryption key used by the first entity for decrypting the output of the trained artificial intelligence structure is a private key of the public/private key pair.

In this way, the method can be performed with a plurality of first entities. For example, a group of hospitals or clinical centers (i.e. the plurality of first entities) may agree on a public/private key pair and may then encrypt their respective medical data with the public key as the first homomorphic encryption key. The output of the trained artificial intelligence structure may then be decrypted, by the hospitals/clinical centers using the private decryption key to which only they have access.

In some advantageous embodiments, the homomorphic encryption key is a symmetric homomorphic encryption key that is also used by the first entity as a homomorphic decryption key for decrypting the output of the trained artificial intelligence structure.

According to a second aspect, a system for securely processing medical information is provided, comprising at least a first entity and a second entity, wherein the first entity and the second entity are configured to perform the method according to an embodiment of the first aspect. In particular, the system may comprise at least one first computing device representing at least one first entity and a second computing device as the second entity. As has been described in the foregoing, a plurality of first entities may be present in the system.

The invention also provides a computer program comprising executable program code configured to, when executed (e.g. by a computing device), perform the method according to an embodiment of the first aspect of the invention.

The invention also provides a non-transitory computer-readable data storage medium comprising executable program code configured to, when executed (e.g. by a computing device), perform the method according to an embodiment of the first aspect of the invention.

The invention also provides a data stream comprising (or configured to generate) executable program code configured to, when executed (e.g. by a computing device), perform the method according to an embodiment of the first aspect of the invention.

According to a third aspect, a computer-implemented method for securely processing medical information is provided, wherein a first entity possesses medical information about at least one patient, the method comprising at least:
encrypting, by the first entity, medical data based on the medical information with a homomorphic encryption key provided by a second entity in such a way that the homomorphic encryption key does not become known to the first entity and further such that neither unencrypted nor encrypted medical data becomes known to the second entity;
providing the encrypted medical data to an entity different from the second entity;
receiving, by the entity different from the second entity, an encrypted parameter set encrypted using the homomorphic encryption key;
receiving, by the entity different from the second entity, a code structure configured to process, using the encrypted parameter set, the encrypted medical data;
processing, by the entity different from the second entity, the encrypted medical data using the code structure with the encrypted parameter set such as to obtain an encoded result; and
transmitting the encoded result to the second entity.

In an optional step, the encrypted parameter set may be transmitted, by the second entity, to the entity different from the second entity, optionally after having encrypted a previously unencrypted parameter set. In a further optional step, the code structure may be transmitted from the second entity to the entity different from the second entity. In another optional step, the encoded result is, after having been received by the second entity, decoded by the second entity in order to obtain a plaintext result.

The encrypting of the medical information may in particular be performed using secure multiparty computation. Secure multiparty computation (or SMPC for short) is a special discipline of cryptology that deals with calculations where multiple parties collaborate, but the individual parties do not want to, and thus do not, disclose their input to the other parties.

The code structure may be an algorithm or an artificial intelligence structure, in particular an artificial intelligence structure comprising, or consisting of, at least one artificial neural network. The code structure may realize a forward model and/or a type of mathematical function.

In some advantageous embodiment, the entity different from the second entity either is the first entity, and in some advantageous embodiments the entity different from the second entity is a third entity that is different from both the first entity and the second entity.

When the entity different from the second entity is the first entity, then the first entity not only provides the trained artificial intelligence structure but also deploys the trained artificial intelligence structure as a service.

When the entity different from the second entity is a third entity different from both the first entity and the second entity, this has the advantage that the third entity may be chosen based on criteria such as availability, cost, computing power available and/or the like. For example, the third entity may be a computing device, preferably a cloud computing platform. In this way, the trained artificial intelligence structure may be deployed as a cloud service. Because of the outputs of that cloud service being encrypted, it is a service that is only useful for the first entity which has access to (in particular: possesses) the homomorphic encryption key.

According to a fourth aspect, a system for securely processing medical information is provided, comprising at least a first entity and a second entity, wherein the first entity and the second entity are configured to perform the method according to an embodiment of the third aspect. In particular, the system may comprise at least one first computing device representing at least one first entity and a second computing device as the second entity. As has been described in the foregoing, a plurality of first entities may be present in the system.

The invention also provides a computer program comprising executable program code configured to, when executed (e.g. by a computing device), perform the method according to an embodiment of the third aspect of the invention.

The invention also provides a non-transitory computer-readable data storage medium comprising executable program code configured to, when executed (e.g. by a computing de-vice), perform the method according to an embodiment of the third aspect of the invention.

The invention also provides a data stream comprising (or configured to generate) executable program code configured to, when executed (e.g. by a computing device), perform the method according to an embodiment of the third aspect of the invention.

Further advantageous variants and embodiments are described and comprised in the dependent claims as well as in the following description in combination with the drawings.

### Brief description of the drawings

The invention will be explained in greater detail with reference to exemplary embodiments depicted in the drawings is appended.

The accompanying drawings are included to provide a further understanding of the present invention and are incorporated in and constitute a part of this specification. The drawings illustrate the embodiments of the present invention and together with the description serve to explain the principles of the invention.

Other embodiments of the present invention and many of the intended advantages of the present invention will be readily appreciated as they become better understood by reference to the following detailed description. Like reference numerals designate corresponding similar parts. It shall be understood that method steps are numbered for easier reference but that said numbering does not necessarily imply steps being performed in that order unless explicitly or implicitly described otherwise. In particular, steps may also be performed in a different order than indicated by their numbering. Some steps may be performed simultaneously or in an overlapping manner.
- Fig. 1: schematically illustrates a method according to an embodiment of the first aspect as well as a system according to an embodiment of the second aspect;
- Fig. 2: schematically illustrates a method according to another embodiment of the first aspect as well as a system according to another embodiment of the second aspect;
- Fig. 3: schematically illustrates a method according to an embodiment of the third aspect as well as a system according to an embodiment of the fourth aspect;
- Fig. 4: schematically illustrates a method according to another embodiment of the third aspect as well as a system according to another embodiment of the fourth aspect;
- Fig. 5: schematically illustrates a computer program product according to an embodiment; and
- Fig. 6: schematically illustrates a data storage medium according to an embodiment.

### Detailed description of the invention

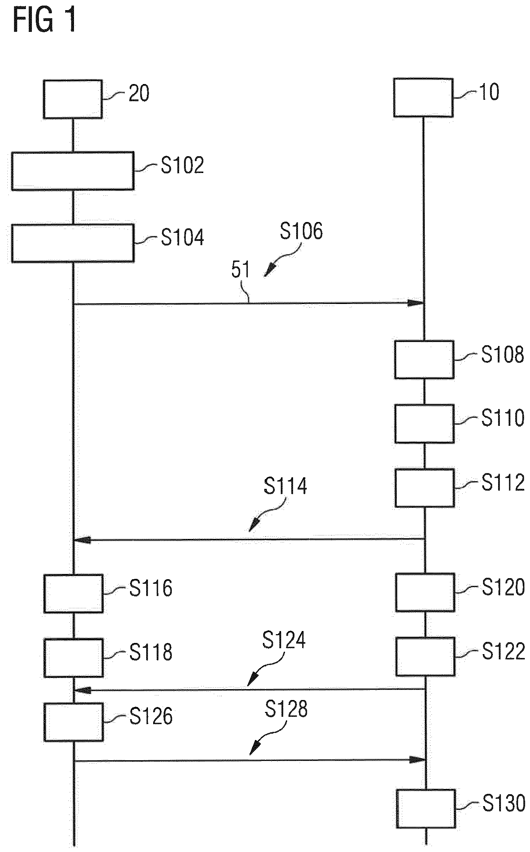

Fig. 1 schematically illustrates a computer-implemented method for securely processing medical information according to an embodiment of the first aspect of the present invention.

In the embodiment shown in Fig. 1, a first entity 10 has access to, or possesses, medical information of at least one patient, and intends to have this medical information processed by a forward model. The first entity 10 may therefore also be designated as a data source. A second entity 20, for example a computing system or computing device of a research organization, has access to technical and computational problem-solving tools, in particular to the forward model. The first entity 10 wants obtain a result by said forward model without disclosing any of the actual medical information to the second entity 20. The following steps are preferably automated.

In a step S102, the second entity 20 provides a forward model. The forward model may be based on computational fluid dynamics, electrophysiology, electromechanics and/or the like, and may comprise, or consist of, an artificial intelligence structure, in particular an artificial neural network. The second entity 20 may be a computing device, and the forward model may be provided S102 in the second entity 20 (i.e .in the computing device) by being saved in a data storage of the computing device.

The forward model may be first provided as a forward model which directly uses personal data (e.g. medical data based on medical information about at least one patient such as images, invasive and/or non-invasive measurements) as plaintext input to generate a clinical measure of interest. Then, the forward model may be refactored so that instead cyphertexts are used as input data. Importantly, the homomorphic encryption key *k* used to create the cyphertext from plaintext does not have to be known for the refactoring.

In a step S104, the second entity 20 develops, or generates, a workflow model 51 capable of generating synthetic patient data. In some variants, another entity than the first entity 10 and the second entity 20 may provide the workflow model 51. The workflow model 51 may be realized as a standalone executable.

In a step S106, the workflow model 51 is transmitted, in particular by the entity (e.g. the second entity 20) which provided it, to the first entity 10. The first entity 10 receives the workflow model 51.

In a step S108, the first entity 10 generates (a database of) synthetic patient data based on the medical data of at least one patient available to the second entity 20 using the workflow model 51.

In a step S110, the first entity 10 provides training input data for an artificial intelligence structure. In case of supervised learning, this may comprise preparing input-output pairs (*xᵢ*, *yᵢ*) such that the training input data comprise input-output pairs, i.e. input vectors with corresponding desired output vectors, or labels. The workflow model 51 is preferably configured to prepare such input-output pairs as synthetic patient data. In this case, steps S108 of generating the synthetic patient data and step S110 of providing the training input data may coincide.

In a step S112, the first entity 10 encrypts the provided training input data, thus providing encrypted training input data. The encrypting S112 is performed using a homomorphic encryption key *k*, preferably a symmetric homomorphic encryption key *k*. In the case of input-output pairs, both input and output vectors are encrypted separately using the same homomorphic encryption key *k*.

In a step S114, the encrypted training input data are transmitted by the first entity 10 to the second entity 20, which receives the encrypted training input data. The second entity 20 does not have access to the homomorphic encryption key *k* and thus cannot decrypt the encrypted training input data so that the medical data are secure.

In a step S116, the second entity 20 trains an artificial intelligence structure using the received encrypted training input data, for example using supervised learning. The training may be performed on-line or offline. Accordingly, the transmitting S114 of the encrypted training input data may be performed in a single transmission, or in batches. The artificial intelligence structure preferably comprises, or consists of, at least one artificial neural network.

In a step S118, the second entity 20 deploys, or provides, the trained artificial intelligence structure. Preferably, the trained artificial intelligence structure is deployed as a cloud service on a cloud computing device of the second entity 20. Alternatively, the trained artificial intelligence structure may also be transmitted by the second entity 20 to a third entity (separate from the first entity 10) which does not have access to a decryption key corresponding to the homomorphic encryption key *k*, and said third entity may then deploy the trained artificial intelligence structure.

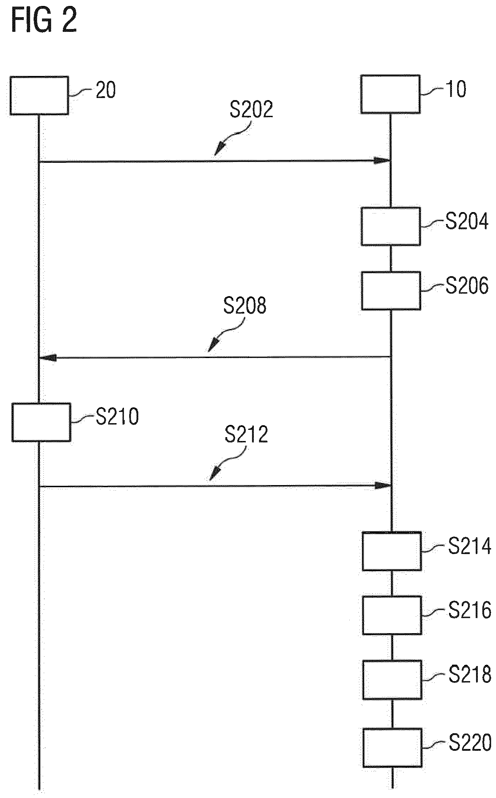

For example, the third entity may be a cloud computing system (owned e.g. by a cloud computing service provider) separate from both the first entity 10 and the second entity 20. In some embodiments, the trained artificial intelligence structure may also be transmitted to the first entity 10, e.g. as described in the following with respect to Fig. 2.

The following steps may be performed as part of an online application, i.e. as part of an inference phase, and may thus be performed sometime after the previous steps.

In a step S120, the first entity 10 provides inference phase input data p. For example, the first entity 10 may be a computing system comprising at least one medical imaging device which generates medical images which are then automatically used as, or used to automatically generate, the inference phase input data *p*. The first entity 10 may also consist of, or comprise, a picture archiving and communications system, PACS, from which medical imaging data may be retrieved to provide S120 the inference phase input data *p*.

In a step S122, the first entity 10 (or any other entity which has access to the homomorphic encryption key *k*) encrypts, using the homomorphic encryption key *k*, inference phase input data *p*, thus generating encrypted inference phase input data *h*(*p*,*k*). The inference phase input data *p* may in particular be input data for which no corresponding output data are yet known as is usual in inference phases.

In a step S124, the encrypted inference phase input data *h*(*p*,*k*) are transmitted, by the first entity 10, to the second entity 20, preferably directly to the deployed artificial intelligence structure. The second entity 20 receives the transmitted encrypted inference phase input data *h*(*p*,*k*).

In a step S126, an element of the first entity 20, e.g. a cloud computing device running the trained artificial intelligence structure as a cloud service, processes the received encrypted inference phase input data *h*(*p*,*k*) using the trained artificial intelligence structure such as to obtain an output *g*(*h*(*p,k*))*.* If the trained artificial intelligence structure is deployed by an entity different from the second entity 20, then the processing S126 is performed by said entity instead.

In a step S128, the obtained output is transmitted, by the second entity 20 (or by whichever entity deploys the trained artificial intelligence structure and thus performs the processing S126) to the first entity 10.

In a step S130, the first entity 10 then decrypts the obtained output *g*(*h*(*p,k*)) so as to obtain a plaintext output comprising the desired result of the forward model using the medical data as input. In case of a symmetric homomorphic encryption key *k*, the decrypting S130 may be performed using the same homomorphic encryption key *k* also for decryption, so that a hypothetical result *f(p)* of the forward model based on the inference phase input data *p* is equal to, or approximated well by, the decrypted encrypted output *d(g(h(p,k)),k)* of the forward model.

When the homomorphic encryption key k is e.g. a public key of a public/private key pair, then in the decrypting S130 a corresponding private key c of the public/private key pair may be used such that the decrypted encrypted output is *d(g(h(p,k)),c).*

Fig. 1 also serves to illustrate a system 100 for securely processing medical information according to an embodiment of the second aspect, the system 100 comprising at least a first entity 10 and a second entity 20, wherein the first entity 10 and the second entity 20 are configured to perform the method as described with respect to Fig. 1.

Fig. 2 schematically illustrates a computer-implemented method for securely processing medical information according to another embodiment of the first aspect of the present invention.

In the embodiment shown in Fig. 2, a first entity 10 has access to, or possesses, medical information of at least one patient, and intends to have this medical information processed by a forward model. The first entity 10 may therefore also be designated as a data source. Preferably, a plurality of first entities 10 (or: data sources) is present and employs this method. A second entity 20, for example a computing system or computing device of a research organization, has access to technical and computational problem-solving tools, in particular to the forward model. The first entity 10 wants to run that forward model without disclosing any of the actual medical information to the second entity 20. The following steps are preferably automated.

In a step S202, the second entity 20 requests data fulfilling at least one selection criterion from the first entity 10. For example, the second entity 20 may be a scanner (or: imaging device) manufacturer that has identified a use case of computer-aided clinical decision making based on medical images acquired using one type of its scanners.

The at least one selection criterion may comprise a request for:
- training data based on specific demographics (e.g. only female patient between twenty and thirty years old;
- training data based on at least one specific diagnosis;
- training data having specific medical image properties (e.g. images having a predefined minimum quality of images, images generated by a specific modality and/or the like);
- training data being generated, or having been subjected to, a specific pre-processing script (e.g. normalization, curation, filtering and/or the like).

In the above example, as the manufacturer is interested only in medical data, in particular images, as generated from the scanners it has manufactured, the criterion may require medical data generated by such scanners.

In a step S204, the first entity 10 may provide training input data based on the medical information which fulfills the at least one criterion as stipulated by the second entity 20. This providing S204 may include filtering, normalizing, curating and/or the like.

In a step S206, the first entity 10 encrypts the provided training input data, thus providing encrypted training input data. The encrypting S206 is performed using a homomorphic encryption key *k*, preferably a symmetric homomorphic encryption key *k*. In the case of input-output pairs, both input and output vectors are encrypted separately using the same homomorphic encryption key *k*.

In a step S208, the encrypted training input data are transmitted by the first entity 10 to the second entity 20, which receives the encrypted training input data. The second entity 20 does not have access to the homomorphic encryption key *k* and thus cannot decrypt the encrypted training input data so that the medical data are secure.

In a step S210, the second entity 20 trains an artificial intelligence structure using the received encrypted training input data, for example using supervised learning. The training may be performed on-line or offline. Accordingly, the transmitting S208 of the encrypted training input data may be performed in a single transmission, or in batches. The artificial intelligence structure preferably comprises, or consists of, at least one artificial neural network.

In a step S212, the second entity 20 transmits the trained artificial intelligence structure to the first entity 10. This may comprise transmitting the entire trained artificial intelligence structure itself, or it may comprise, or consist of, transmitting information about the architecture of the artificial intelligence structure (types of artificial neural networks, types of layers, hyperparameters) and information about the weights and/or biases (i.e. parameters) of the trained artificial intelligence structure as resulting from the training.

The following steps may be performed as part of an online application, i.e. as part of an inference phase, and may thus be performed sometime after the previous steps.

In a step S214, the first entity 10 provides inference phase input data *p*. For example, the first entity 10 may be a computing system comprising at least one medical imaging device which generates medical images which are then automatically used as, or used to automatically generate, the inference phase input data *p*. The first entity 10 may also consist of, or comprise, a picture archiving and communications system, PACS, from which medical imaging data may be retrieved to provide S214 the inference phase input data *p*.

In a step S216, the first entity 10 (or any other entity which has access to the homomorphic encryption key *k*) encrypts, using the homomorphic encryption key *k*, inference phase input data *p*, thus generating encrypted inference phase input data *h(p,k)*. The inference phase input data *p* may in particular be input data for which no corresponding output data are yet known as is usual in inference phases.

In a step S218, the first entity 10, or a part of it, e.g. a cloud computing device running the trained artificial intelligence structure as a cloud service, or a computing device such as an array of CPUs and/or GPUs of the first entity 10, processes the encrypted inference phase input data *h(p,k)* using the trained artificial intelligence structure such as to obtain an output *g*(*h(p,k)).*

In a step S220, the first entity 10 then decrypts the obtained output *g*(*h(p,k))* so as to obtain a plaintext output comprising the desired result of the forward model using the medical data as input. In case of a symmetric homomorphic encryption key *k*, the decrypting S220 may be performed using the same homomorphic encryption key *k* also for decryption, so that a hypothetical result *f(p)* of the forward model based on the inference phase input data *p* is equal to, or approximated well by, the decrypted encrypted output *d(g(h(p,k)),k)* of the forward model.

Fig. 2 also serves to illustrate a system 200 for securely processing medical information according to an embodiment of the second aspect, the system 100 comprising at least a first entity 10 and a second entity 20, wherein the first entity 10 and the second entity 20 are configured to perform the method according as described with respect to Fig. 2.

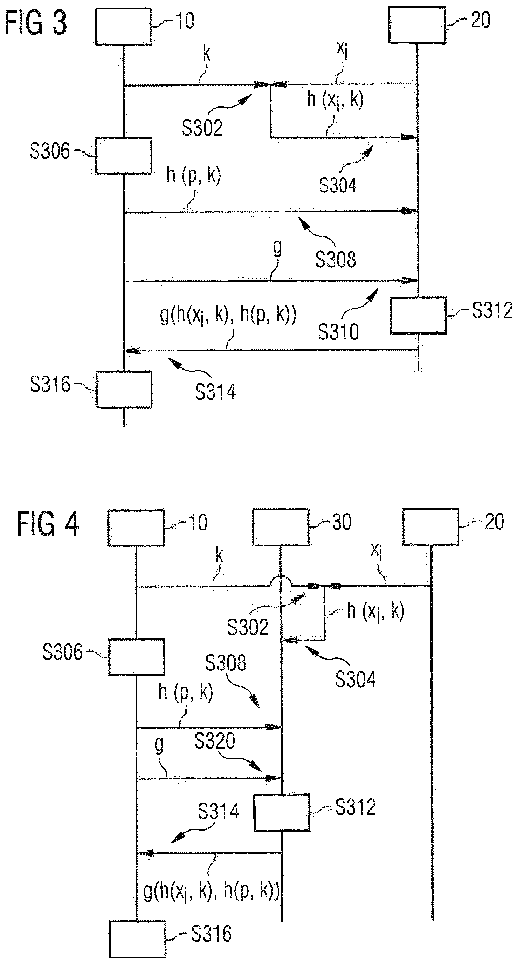

Fig. 3 and Fig. 4 schematically each illustrate a computer-implemented method for securely processing medical information according to embodiments of the third aspect of the present invention.

Fig. 3 also serves to illustrate a system 300 for securely processing medical information according to an embodiment of the fourth aspect, the system 300 comprising at least a first entity 10 and a second entity 20, wherein the first entity 10 and the second entity 20 are configured to perform the method as described with respect to Fig. 3.

Fig. 4 also serves to illustrate a system 400 for securely processing medical information according to an embodiment of the fourth aspect, the system 400 comprising at least a first entity 10, a second entity 20, and a third entity 30, wherein the first entity 10, the second entity 20 and the third entity 30 are configured to perform the method as described with respect to Fig. 4.

In the embodiment shown in Fig. 3 and Fig. 4, a first entity 10 has access to, or possesses, medical information of at least one patient, and may therefore also be designated as a data source. A second entity 20 desires to perform a function, represented by a code structure, using on the one hand the medical information and on the other hand a parameter set known to (or: possessed by) the second entity 20. The parameter set may e.g. comprise a set of weights and/or biases for instantiating at least one trained artificial neural network.

The first entity 10 does not want (or is not allowed to) let the second entity 20 have direct access to the medical information, e.g. for reasons of data privacy. The second entity 20 does not want to let the first entity 10 have access to the parameter set which may be secret know-how. The second entity 20 may, for example, be a research organization or a manufacturer of medical imaging devices or the like.

The code structure may be an algorithm or an artificial intelligence structure, in particular an artificial intelligence structure comprising, or consisting of, at least one artificial neural network. The code structure may realize a forward model and/or a type of mathematical function. The following steps are preferably automated.

In a step S302, medical data *xᵢ* (i=1..N for N input vectors) based on the medical information possessed by the first entity 10 is encrypted using a homomorphic encryption key provided by the second entity 20, so as to obtain encrypted medical data *h(xᵢ,k)*. The encrypting S302 is performed in such a way that the homomorphic encryption key *k* does not become known to the first entity 10 and further such that neither unencrypted medical data *xᵢ* nor encrypted medical data *h(xᵢ,k)* becomes known to the second entity 20. This may be achieved, for example, by secure multi-party computation. The medical data may be the same as the medical information.

In other variants, the medical data may be based on the medical information e.g. by comprising, or consisting of, synthetic patient data generated based on the medical information, or a subset of the medical information. In variants in which the medical data is different from the medical information it is based on, the method may comprise a further step (not shown) of generating the medical data from (or: based on) the medical information.

The encrypting of the medical data may in particular be performed using secure multiparty computation. Secure multiparty computation (or SMPC for short) is a special discipline of cryptology that deals with calculations where multiple parties collaborate, but the individual parties do not want to, and thus do not, disclose their input to the other parties. In a step S304, the encrypted medical data *h(xᵢ,k)* is provided (e.g. transmitted) to an entity different from the second entity 20, in particular to an entity that does not have access to the homomorphic encryption key *k*. This is because the second entity 20 could, if it had access to the encrypted medical data, decrypt it to re-obtain the original medical data. Conversely, in step S304 the entity different from the second entity 20 receives the encrypted medical data *h(xᵢ,k).*

In the embodiment (or variant) shown in Fig. 3, in step S304 the encrypted medical data *h(xᵢ,k)* is transmitted to the first entity 10. Since the first entity 10 has access to the original medical information anyway, transmitting the encrypted medical data *h(xᵢ,k)* to the first entity 10 does not constitute any security breach.

In the embodiment (or variant) shown in Fig. 3, in step S304 the encrypted medical data *h(xᵢ,k)* is transmitted to a third entity 30 different from both the first entity 10 and the second entity 20 which does not have access to a decryption key *c* (corresponding to the homomorphic encryption key *k*) necessary for decrypting the encrypted medical data *h(xᵢ,k).* The third entity 30 may, for example, be a remote computing device, preferably a cloud computing platform.

In a step S306, the second entity 20 encrypts, using the homomorphic encryption key *k*, the parameter *p* set it possesses, in order to obtain an encrypted parameter set *h(p, k).*

In a step S308, the second entity 20 transmits the encrypted parameter set *h(p, k)* to the entity different from the second entity 20, i.e. to the second entity 20 in the embodiment shown in Fig. 3 or, respectively, to the third entity 30 in the embodiment shown in Fig. 4. Conversely, in step S308, the entity different from the second entity 20 receives the encrypted parameter set *h(p, k).*

In a step S310, the second entity 20 transmits the code structure *g* (which is configured to process, using an encrypted parameter set, encrypted medical data) to the entity different from the second entity 20, i.e. to the second entity 20 in the embodiment shown in Fig. 3 or, respectively, to the third entity 30 in the embodiment shown in Fig. 4. Conversely, in step S310, the entity different from the second entity 20 receives the code structure *g*.

Although steps S308 and S310 are nominally described as different, they can be integrated into one another, i.e. be realized e.g. by the transmission of a single signal.

In a step S312, the encrypted medical data *h(xᵢ,k)* is processed using the code structure *g* with the encrypted parameter set *h(p,k)* such as to obtain an encoded result *g(h(xᵢ,k), h(p,k))*. For example, the entity different from the second entity 20 may instantiate an artificial intelligence structure (preferably comprising, or consisting of, at least one artificial neural network) using the encrypted parameter set *h(p,k)*, and then use the encrypted medical data *h(xᵢ,k)* as input for the artificial intelligence structure.

In a step S314, the encrypted result *g*(*h(xᵢ,k)*, *h(p,k))* is then transmitted to the second entity 20 (by the first entity 10 in the embodiment of Fig. 3 or, respectively, by the third entity 30 in the embodiment of Fig. 4).

In some variants or embodiments, the transmitted encrypted result comprises the individual, single results for each input vector of the encrypted medical data *h(xᵢ,k).* In other variants or embodiments, the transmitted encrypted result comprises, or consists of, a sum over all, or over a subset (preferably a randomly chosen subset) of the medical data *xᵢ*, such as to enable a stochastic gradient descent.

In the embodiment shown in Fig. 4, a subset of individual results to be summed over may be selected by the third entity 30 as long as this is not revealed to the second entity 20.

In a step S316, the second entity 20 uses a homomorphic decryption key c corresponding to the homomorphic encryption key *k* to decrypt the encrypted result *g*(*h(xᵢ,k)*, *h(p,k))* in order to obtain a decrypted encrypted result *d(g(h(xᵢ,k), h*(*p,k*))*,c*) which is, due to the homomorphic properties of the keys *k, c,* identical to performing a function *f(xᵢ,p)* on the unencrypted medical data xᵢ using an unencrypted parameter set p' corresponding to the encrypted parameter set *p*. If the homomorphic encryption key *k* is a symmetric homomorphic encryption key, then the same key may be used by the second entity 20 to decrypt the encrypted result by calculating *d(g(h(xᵢ,k), h(p,k)),k).*

In this way, the second entity 20 ends up with the desired result without any direct access to the medical information or even to the encrypted medical data *xᵢ*.

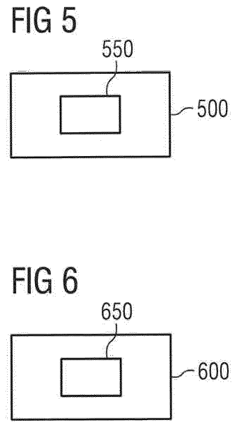

Fig. 5 schematically illustrates a computer program product 500 comprising executable program code 550. The executable program code 350 may be configured to perform, when executed (e.g. by a computing device), the method according to the first aspect. Alternatively, the executable program code 550 may be configured to perform, when executed (e.g. by a computing device), the method according to the first aspect, or the method according to the third aspect.

Fig. 6 schematically illustrates a non-transitory computer-readable data storage medium 600 comprising executable program code 650 configured to, when executed (e.g. by a computing de-vice), perform the method according to the first aspect. Alternatively, the executable program code 650 may be configured to perform, when executed (e.g. by a computing device), the method according to the first aspect, or the method according to the third aspect.

In the foregoing detailed description, various features are grouped together in one or more examples or examples with the purpose of streamlining the disclosure. It is to be understood that the above description is intended to be illustrative, and not restrictive. It is intended to cover all alternatives, modifications and equivalents. Many other examples will be apparent to one skilled in the art upon reviewing the above specification.

The embodiments were chosen and described in order to best explain the principles of the invention and its practical applications, to thereby enable others skilled in the art to best utilize the invention and various embodiments with various modifications as are suited to the particular use contemplated. In the appended claims and throughout the specification, the terms "including" and "in which" are used as the plain-English equivalents of the respective terms "comprising" and "wherein," respectively. Furthermore, "a" or "one" does not exclude a plurality in the present case.

## Claims

1. A computer-implemented method for securely processing medical information, comprising:
Providing (S110; S204), by a first entity (10), training input data based on medical information of at least one patient;
encrypting (S112; S206), by the first entity (10), the provided training input data to provide encrypted training input data, wherein the encrypting (S112; S206) is performed using a homomorphic encryption key;
transmitting (S114; S208), by the first entity (10) to a second entity (20) that does not have access to the homomorphic encryption key, the encrypted training input data;
providing (S120; S214) inference phase input data;
encrypting (S122; S216) the provided inference phase input data by the first entity (10) in order to provide encrypted inference phase input data;
processing (S126; S218) the encrypted inference phase input data by an artificial intelligence structure trained using the encrypted training input data so as to obtain an output of the trained artificial intelligence structure based on the encrypted inference phase input data;
decrypting (S130; S220), by the first entity (10), the output of the trained artificial intelligence structure.

2. The method of claim 1, further comprising:
training (S116; S210), by the second entity (20), an artificial intelligence structure using the received encrypted training input data in order to obtain the trained artificial intelligence structure.

3. The method of claim 1 or claim 2, further comprising:
providing (S212) the trained artificial intelligence structure to the first entity (10) by the second entity (20);
wherein the inference phase input data is provided (S214) and encrypted (S216) by the first entity (10), and wherein the processing (S218) of the encrypted inference phase input data into the trained artificial intelligence structure is performed by the first entity (10).

4. The method of any of claims 1 to 3, further comprising:
transmitting (S124), by the first entity (10), the encrypted inference phase input data to an entity (20) different from the first entity (10);
processing (S126), by the entity (20) different from the first entity (10), the encrypted inference phase input data using the trained artificial intelligence structure in order to obtain an output of the trained artificial intelligence structure; and
transmitting (S128), by the entity (20) different from the first entity (10), the output of the trained artificial intelligence structure to the first entity (10).

5. The method of claim 4,
wherein the entity different from the first entity (10) is the second entity (20).

6. The method of claim 4,
wherein the entity different from the first entity (10) is a third entity that is different from both the first entity (10) and the second entity (20).

7. The method of any of claims 1 to 6,
further comprising requesting (S202), by the second entity (20), training data fulfilling at least one selection criterion from the first entity (10);
wherein the providing (S208) of the training input data by the first entity (10) is performed such as to fulfill the at least one selection criterion.

8. The method of any of claims 1 to 7, further comprising:
generating synthetic patient data by using a workflow model (51) configured to generate, from the provided medical information of the at least one patient, said synthetic patient data;
wherein the provided training input data comprise, or consist of, the generated synthetic patient data.

9. The method of claim 8, further comprising:
providing (S106), by the second entity (20), the workflow model (51) to the first entity (10).

10. The method of any of claims 1 to 9,
wherein the homomorphic encryption key is a public key of a public/private key pair and a second homomorphic decryption key used by the first entity (10) for decrypting the output of the trained artificial intelligence structure is a private key of the public/private key pair.

11. The method of any of claims 1 to 9,
wherein the homomorphic encryption key is a symmetric homomorphic encryption key that is also used by the first entity (10) as a homomorphic decryption key for decrypting (S130; S220) the output of the trained artificial intelligence structure.

12. A system (100; 200) for securely processing medical information, comprising at least a first entity (10) and a second entity (20), wherein the first entity (10) and the second entity (20) are configured to perform the method according to any of claims 1 to 11.

13. A computer-implemented method for securely processing medical information, wherein a first entity (10) possesses medical information about at least one patient, the method comprising at least:
encrypting (S302), by the first entity (10), medical data based on the medical information with a homomorphic encryption key provided by a second entity in such a way that the homomorphic encryption key does not become known to the first entity (10) and further such that neither unencrypted nor encrypted medical data becomes known to the second entity (20);
providing (S304) the encrypted medical data to an entity (10; 30) different from the second entity (20);
receiving (S308), by the entity (10; 30) different from the second entity, an encrypted parameter set encrypted using the homomorphic encryption key;
receiving (S310), by the entity (10; 30) different from the second entity (20), a code structure configured to process, using the encrypted parameter set, the encrypted medical data;
processing (S312), by the entity (10; 30) different from the second entity (20), the encrypted medical data using the code structure with the encrypted parameter set such as to obtain an encoded result; and
transmitting (S314) the encoded result to the second entity (20).

14. The method of claim 13,
wherein the entity different from the second entity (20) is the first entity (10), or
wherein the entity different from the second entity (20) is a third entity (30) that is different from both the first entity (10) and the second entity (20).

15. A system (300; 400) for securely processing medical information, comprising at least a first entity (10) and a second entity (20), wherein the first entity (10) and the second entity (20) are configured to perform the method according to any of claims 13 or 14.
